# EUROPEAN PATENT APPLICATION

(11) **EP 4 582 860 A1**
(43) Date of publication of application: **09.07.2025**
(21) Application number: 24223619.8
(22) Date of filing: 30.12.2024
(51) Int. Cl.: G02F 1/1333

(54) **OPTICAL LAMINATE, SMART WINDOW INCLUDING THE SAME, AND AUTOMOBILE OR WINDOW FOR BUILDING USING THE SAME**

(30) Priority: 05.01.2024 KR 20240002151
(71) Applicant: Dongwoo Fine-Chem Co., Ltd., Iksan-si, Jeollabuk-do 54631 (KR)
(72) Inventor: KIM, Sung-Min, 54631 Jeollabuk-do (KR); KIM, Dong-Hwi, 54631 Jeollabuk-do (KR)
(74) Representative: Betten & Resch

(57) **Abstract**

Disclosed is a transmittance variable optical laminate including: a first polarizing plate; a surface treatment layer formed on one surface of the first polarizing plate; a first transparent conductive layer formed on the other surface of the first polarizing plate; a second polarizing plate opposite to the first polarizing plate; a second transparent conductive layer formed on one surface of the second polarizing plate; a liquid crystal layer provided between the first transparent conductive layer and the second transparent conductive layer; and a pressure sensitive adhesive layer provided on one surface of the second polarizing plate, wherein the thickness of the first polarizing plate is equal to or greater than the thickness of the second polarizing plate, and the optical laminate has a surface hardness of H or higher. Also disclosed are a smart window comprising the laminate, and an automobile or a window for a building using the same.

## Description

### BACKGROUND

### 1. Technical Field

The present disclosure relates to a transmittance variable optical laminate, a smart window including the same, and an automobile or a window for a building using the same.

### 2. Related Art

In general, there are many cases in which an external light blocking coating is applied to a glass window of a means of transportation such as a vehicle. However, the transmittance of a conventional glass window of a means of transportation is fixed, and the transmittance of the external light blocking coating is also fixed. Therefore, the overall transmittance of the conventional window of the means of transportation is fixed, which may cause an accident. For example, when the overall transmittance is preset low, there is no problem during day when ambient light is sufficient. However, there is a problem in that it is difficult for a driver or the like to properly check the surroundings of the means of transportation at night when ambient light is insufficient. Alternatively, when the overall transmittance is preset high, there is a problem of causing glare to a driver or the like during day when ambient light is sufficient. Accordingly, a transmittance variable optical laminate capable of changing the transmittance of light when a voltage is applied has been developed.

The transmittance variable optical laminate is driven to change transmittance by driving liquid crystals in response to application of a voltage. The transmittance variable optical laminates developed to date are manufactured by forming a conductive layer for driving liquid crystals on a separate substrate and combining the conductive layer with other elements, such as a polarizing plate.

However, if the laminate includes a separate substrate in order to form the conductive layer as described above, there are problems in that the manufacturing process becomes complicated, which increases the manufacturing cost, the thickness of the laminate increases, and retardation occurs, which causes a change in the transmittance.

On the other hand, if the optical laminate has a smaller thickness, there is a problem in that the optical laminate is damaged or surface-scratched when applied to an automobile or a window for a building.

Meanwhile, in order to maintain the cell gap of the liquid crystal layer including the liquid crystals, a spacer is provided within the liquid crystal layer.

For example, Japanese Patent Application Publication No. 2018-010035 also discloses a transmittance variable optical laminate having applied thereto a liquid crystal layer including a column spacer or a ball spacer in order to maintain a predetermined cell gap.

However, if the column spacer is included within the liquid crystal layer as described above, there are problems in that the manufacturing process becomes more complicated, which increases the manufacturing cost, and the transmittance changes as the alignment film is damaged in the process of forming the spacer by irradiating photoresist with UV light. In addition, if a ball spacer is used to maintain the cell gap of the liquid crystal layer, there are problems in that it is impossible to maintain a uniform cell gap, making it difficult to maintain a constant in-plane optical color, and a short circuit occurs in the optical laminate.

Accordingly, there is a need to develop a transmittance variable optical laminate that may maintain a uniform cell gap without using a spacer within a liquid crystal layer and may be prevented from being damaged or scratched while having a reduced thickness.

### [Prior Art Documents]

### [Patent Documents]

(Patent Document 1) Japanese Patent Application Publication No. 2018-010035

### SUMMARY

An object of the present invention is to provide a transmittance variable optical laminate that may be prevented from being scratched on the surface, may have excellent surface hardness and antifouling properties, may be used in a form in which a polarizing plate on one side is exposed to the outside, and thus may have a reduced thickness.

Another object of the present disclosure is to provide a transmittance variable optical laminate which, by including a pressure sensitive adhesive layer having excellent elastic modulus, may have excellent flexural resistance, may be prevented from being damaged, and is attachable to and detachable from an adherend.

Still another object of the present disclosure is to provide a transmittance variable optical laminate which, by not including a separate substrate for forming a conductive layer, has a simplified manufacturing process and a significantly reduced thickness.

Yet another object of the present disclosure is to provide a transmittance variable optical laminate which, by including a liquid crystal layer including a polymer network, may prevent damage to an alignment film or difficulty in maintaining a constant in-plane optical color, which is caused by the use of a spacer.

Still yet another object of the present disclosure is to provide a transmittance variable optical laminate which, by including a liquid crystal layer containing a polymer network and a liquid crystal compound arranged with uniform initial alignment, is capable of controlling the transmittance of incident light.

A further object of the present disclosure is to provide a smart window including the above-described transmittance variable optical laminate and a window for an automobile or a building using the same.

However, the objects of the present disclosure are not limited to the objects mentioned above, and other objects not mentioned will be clearly understood by those skilled in the art from the following description.

The present disclosure relates to a transmittance variable optical laminate including: a first polarizing plate; a surface treatment layer formed on one surface of the first polarizing plate; a first transparent conductive layer formed on the other surface of the first polarizing plate; a second polarizing plate opposite to the first polarizing plate; a second transparent conductive layer formed on one surface of the second polarizing plate and opposite to the first transparent conductive layer; a liquid crystal layer provided between the first transparent conductive layer and the second transparent conductive layer; and a pressure sensitive adhesive layer provided on a surface of the second polarizing plate on which the second transparent conductive layer is not formed, wherein the thickness of the first polarizing plate is equal to or greater than the thickness of the second polarizing plate, and the transmittance variable optical laminate has a surface hardness of H or higher.

In a first aspect of the present disclosure, the surface treatment layer may have a thickness of 5 to 30 µm.

In a second aspect of the present disclosure, the first polarizing plate and the second polarizing plate may each have a thickness of 30 µm to 200 µm.

In a third aspect of the present disclosure, the pressure sensitive adhesive layer may have a storage modulus of 10 MPa or more at 25°C.

In a fourth aspect of the present disclosure, the surface treatment layer may have a water contact angle of 100° or more.

In the fifth aspect of the present disclosure, the liquid crystal driving mode of the liquid crystal layer may be any one selected from the group consisting of a twisted nematic (TN) mode, a super-twisted nematic (STN) mode, an in-plane switching (IPS) mode, a fringe-field switching (FFS) mode, an electrically controlled birefringence (ECB) mode, and a vertical alignment (VA) mode.

In a sixth aspect of the present disclosure, the liquid crystal driving mode of the liquid crystal layer may be a twisted nematic (TN) mode.

In a seventh aspect of the present disclosure, the liquid crystal layer may include a polymer network and a liquid crystal compound, wherein the liquid crystal compound may be arranged with uniform initial alignment.

In an eighth aspect of the present disclosure, the liquid crystal layer may include a cured product of a composition for forming a liquid crystal layer including a polymerizable monomer and a liquid crystal compound.

In a ninth aspect of the present disclosure, the composition for forming a liquid crystal layer may include the polymerizable monomer in an amount of 10 to 30 wt% based on the total weight of the composition.

In a tenth aspect of the present disclosure, at least one of the first transparent conductive layer and the second transparent conductive layer may be formed in direct contact with the first polarizing plate or the second polarizing plate without including a separate substrate therebetween.

In an eleventh aspect of the present disclosure, at least one of the first transparent conductive layer and the second transparent conductive layer may be formed in direct contact with the first polarizing plate or the second polarizing plate while including a highly adhesive layer therebetween.

In a twelfth aspect of the present disclosure, at least one of the first polarizing plate and the second polarizing plate may include at least one functional layer selected from the group consisting of a protective layer, an adhesion-imparting layer, a retardation matching layer, and a refractive index-matching layer.

In a thirteenth aspect of the present disclosure, at least one of the first transparent conductive layer and the second transparent conductive layer may include at least one selected from the group consisting of a transparent conductive oxide, a metal, a carbonaceous material, a conductive polymer, a conductive ink, and nanowires.

In a fourteenth aspect of the present disclosure, the transmittance variable optical laminate may further include at least one selected from the group consisting of a UV-absorbing layer and a hard coating layer.

The present disclosure also relates to a smart window including the above-described transmittance variable optical laminate.

The present disclosure relates to an automobile in which the smart window is applied to at least one of a front window, a rear window, a side window, a sunroof window, and an interior partition.

The present disclosure also relates to a window for a building, including the smart window.

The transmittance variable optical laminate according to the present disclosure may be prevented from being scratched on the surface and may be prevented from being damaged, due to its excellent antifouling properties, surface hardness and flexural resistance.

In addition, in the transmittance variable optical laminate according to the present disclosure, the conductive layer is formed directly on one surface of the polarizing plate, and thus the transmittance variable optical laminate does not include a separate substrate for forming the conductive layer, may be used in a form in which the polarizing plate on one side is exposed to the outside, and may have a significantly reduced thickness compared to a conventional optical laminate as it requires no additional substrate at the outermost portion.

In addition, since the transmittance variable optical laminate according to the present disclosure does not include a separate substrate for forming the conductive layer as the conductive layer is formed directly on one surface of the polarizing plate, it may have improved transmittance in a light transmission mode compared to a conventional optical laminate.

Since the transmittance variable optical laminate according to the present disclosure includes the liquid crystal layer including a polymer network, it may have improved driving stability compared to a conventional optical laminate by preventing damage to an alignment film or difficulty in maintaining a constant in-plane optical color, which is caused by the use of a conventional spacer.

In addition, in the transmittance variable optical laminate according to the present disclosure, even when the polymer network is formed within the liquid crystal layer, the liquid crystal compound may be arranged while maintaining uniform initial alignment, so that the transmittance of light incident on the optical laminate may be controlled.

The present disclosure provides a transmittance variable optical laminate which, by including a pressure sensitive adhesive layer having excellent elastic modulus, may have excellent flexural resistance, may be prevented from being damaged, and is attachable to and detachable from an adherend.

### BRIEF DESCRIPTION OF THE DRAWINGS

FIG. 1 shows the structure of a transmittance variable optical laminate according to an embodiment of the present disclosure.
FIGS. 2a to 2f show the laminated structures of polarizing plates according to one or more embodiments of the present disclosure.

### DETAILED DESCRIPTION

The present disclosure relates to a transmittance variable optical laminate which, by including a surface treatment layer on one surface of a polarizing plate, may be prevented from being scratched on the surface, and by including a pressure sensitive adhesive layer having excellent elastic modulus, may be prevented from being damaged.

More specifically, the present disclosure relates to a transmittance variable optical laminate, a smart window including the same, and a window for an automobile or a building using the same, wherein the transmittance variable optical laminate includes: a first polarizing plate; a surface treatment layer formed on one surface of the first polarizing plate; a first transparent conductive layer formed on the other surface of the first polarizing plate; a second polarizing plate opposite to the first polarizing plate; a second transparent conductive layer formed on one surface of the second polarizing plate and opposite to the first transparent conductive layer; a liquid crystal layer provided between the first transparent conductive layer and the second transparent conductive layer; and a pressure sensitive adhesive layer provided on a surface of the second polarizing plate on which the second transparent conductive layer is not formed, wherein the thickness of the first polarizing plate is equal to or greater than the thickness of the second polarizing plate, and the transmittance variable optical laminate has a surface hardness of H or higher.

As the transmittance variable optical laminate of the present invention includes the surface treatment layer on one surface of the first polarizing plate, it may be prevented from being scratched on the surface, may have excellent surface hardness and antifouling properties, may be used in a form in which a polarizing plate on one side is exposed to the outside, and thus may have a reduced thickness. Furthermore, as the transmittance variable optical laminate of the present invention includes the pressure sensitive adhesive layer on one surface of the second polarizing plate, it may have excellent flexural resistance, may be prevented from being damaged, and is attachable to and detachable from an adherend.

The transmittance variable optical laminate of the present disclosure is particularly suitable for technical fields where the transmittance of light can be changed in response to the application of voltage, and may be used, for example, for a smart window or the like.

The term "smart window" means an optical structure that controls the amount of light or heat passing therethrough by changing light transmittance in response to the application of an electrical signal. In other words, the smart window is configured to be changed into a transparent, opaque or translucent state by voltage and is also called variable transmittance glass, light control glass, or smart glass.

The smart window may be used as a partition for partitioning the internal space of a vehicle or a building or as a partition for privacy, and may be used as a skylight window arranged at an opening of a building. Furthermore, the smart window may be used as highway signs, notice boards, score boards, clocks or advertisement screens, and may be used to replace windows of vehicles, buses, airplanes, ships, or trains, or windows of means of transportation, such as a sunroof.

The transmittance variable optical laminate of the present disclosure may also be used for the smart window in the various technical fields mentioned above, but since the conductive layer is directly formed on the polarizing plate, there is no need to include a separate substrate for forming the conductive layer and the thickness thereof is small and the transmittance variable optical laminate is favorable in terms of flexural properties, and thus the optical laminate of the present disclosure may particularly suitable for use for a smart window for a vehicle or a building. In one or more embodiments, a smart window having applied thereto the transmittance variable optical laminate of the present disclosure may be used as a front window, a rear window, a side window, and a sunroof window of an automobile, or a window for a building, and in addition to being used to block external light, may also be used for partitioning the internal space of an automobile or a building, or for protecting privacy, such as being used as an internal partition.

Hereinafter, embodiments of the present disclosure will be described in more detail with reference to the accompanying drawings. However, the following drawings attached to this specification illustrate preferred embodiments of the present disclosure, and serve to aid in further understanding of the technical idea of the present disclosure together with the contents of the present disclosure described above. Therefore, the present disclosure should not be interpreted as being limited only to matters described in the drawings.

Terms used in the present specification are for purpose of describing embodiments and are not intended to limit the present disclosure. In the present specification, singular forms also include plural forms unless the context clearly indicates otherwise. For example, the term "polarizing plate" as used herein may mean at least one polarizing plate among a first polarizing plate and a second polarizing plate, and the term "transparent conductive layer" may mean at least one transparent conductive layer among a first transparent conductive layer and a second transparent conductive layer.

As used herein, terms such as "comprise", "comprising", "include", and "including" are intended to denote the existence of one or more stated components, steps, operations, and/or elements, but do not exclude the probability of existence or addition of one or more other components, steps, operations, and/or elements. Throughout the specification, like reference numerals refer to like components.

Spatially relative terms, such as "below", "lower surface", "beneath ", "above", "upper surface", "on" and the like, may be used to easily describe the relationship between one element or component(s) and other element or components(s) as illustrated in the figures. Spatially relative terms should be understood to encompass different orientations of the component in use or operation, in addition to the orientation depicted in the figures. Spatially relative terms should be understood to encompass different orientations of the element in use or operation, in addition to the orientation depicted in the figures. For example, when elements illustrated in the figures are turned over, an element described as being "below" or "beneath" another element may be placed "above" the other element. Thus, the exemplary term "below" may include both the terms "above" and "below". The element may also be oriented in a different direction, and thus spatially relative terms may be interpreted according to the orientation.

As used herein, the term "plane direction" may be interpreted as a direction orthogonal to the polarizing plate and/or the transparent conductive layer, that is, the direction of the user's view.

### <Transmittance Variable Optical Laminate>

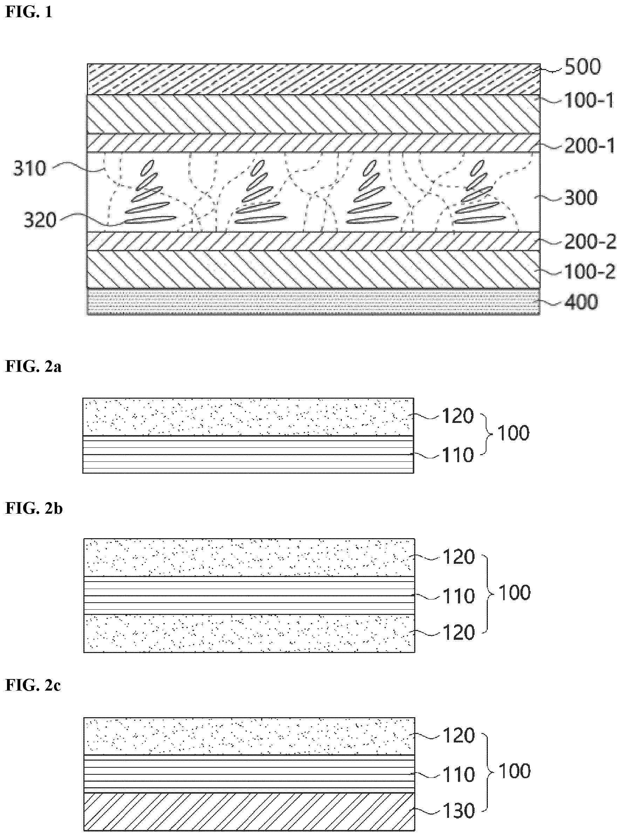

FIG. 1 shows the structure of a transmittance variable optical laminate according to an embodiment of the present disclosure, and FIGS. 2a to 2f show the laminated structures of polarizing plates according to one or more embodiments of the present disclosure.

Referring to FIG. 1, a transmittance variable optical laminate according to an embodiment of the present disclosure may include a first polarizing plate 100-1, a second polarizing plate 100-2, a first transparent conductive layer 200-1, a second transparent conductive layer 200-2, a liquid crystal layer 300, a pressure sensitive adhesive layer 400, and a surface treatment layer 500.

In the transmittance variable optical laminate of the present disclosure, the surface treatment layer 500 may be formed on one surface of the first polarizing plate 100-1, the first transparent conductive layer 200-1 may be formed on the other surface on which the surface treatment layer 500 is not formed, the second transparent conductive layer 200-2 may be formed on one surface of the second polarizing plate 100-2, and the pressure sensitive adhesive layer 400 may be provided on the other surface of the second polarizing plate 100-2 on which the second transparent conductive layer 200-2 is not formed.

The surface treatment layer 500 may have excellent antifouling properties and abrasion resistance by being formed from a composition for forming a surface treatment layer including a hydroxyl group-containing light-transmitting resin, a fluorine-based UV-curable functional group-containing compound, a photoinitiator, and a solvent. Specifically, the hydroxyl group of the hydroxyl group-containing light-transmitting resin may act to repel the fluorine atoms of the fluorine-based UV-curable functional group-containing compound so that the fluorine atoms may be oriented toward the surface of the surface treatment layer. In particular, the hydroxyl group-containing light-transmitting resin may form a matrix of the surface treatment layer by photocuring, thereby improving the abrasion resistance of the surface treatment layer.

In one embodiment of the present disclosure, the hydroxyl group-containing light-transmitting resin may be a photocurable resin, wherein the photocurable resin may include a hydroxyl group-containing (meth)acrylate compound.

Examples of the hydroxyl group-containing (meth)acrylate compound include 2-hydroxyethyl (meth)acrylate, 2-hydroxypropyl (meth)acrylate, 2-hydroxybutyl (meth)acrylate, 2-hydroxy-3-phenyloxypropyl (meth)acrylate, 1,4-butanediol mono(meth)acrylate, 2-hydroxy alkyl (meth)acryloyl phosphate (wherein the alkyl is, for example, methyl, ethyl or propyl), 4-hydroxycyclohexyl (meth)acrylate, 1,6-hexanediol mono(meth)acrylate, neopentyl glycol mono(meth)acrylate, trimethylolpropane di(meth)acrylate, trimethylolethane di(meth)acrylate, pentaerythritol tri(meth)acrylate, dipentaerythritol penta(meth)acrylate, and the like, which may be used alone or in combination of two or more.

The hydroxyl group-containing light-transmitting resin may be contained in an amount of 1 to 50 wt%, preferably 5 to 50 wt%, based on 100 wt% of the total weight of the composition for forming a surface treatment layer. If the content of the hydroxyl group-containing light-transmitting resin is less than 1 wt%, a problem may arise in that the abrasion resistance may be reduced and it may be difficult to sufficiently improve the hardness, and if the content is more than 50 wt%, a problem may arise in that curling becomes severe.

In one embodiment of the present disclosure, the fluorine-based UV-curable functional group-containing compound is a component that provides antifouling properties, abrasion resistance, and chemical resistance. The fluorine-based UV-curable functional group-containing compound is not particularly limited as long as it contains fluorine, has a UV-curable functional group and thus may chemically bond with the hydroxyl group-containing light-transmitting resin that forms a matrix of the surface treatment layer.

The fluorine-based UV-curable functional group-containing compound may preferably be at least one selected from the group consisting of a (meth)acrylate containing a perfluoroalkyl group, a (meth)acrylate containing a perfluoropolyether group, a (meth)acrylate containing a perfluorocyclic aliphatic group, and a (meth)acrylate containing a perfluoroaromatic group. In this case, the fluorine-based UV-curable functional group-containing compound may advantageously exhibit excellent antifouling performance and, at the same time, forms a chemical bond with the surface treatment layer, thereby exhibiting excellent durability so that the antifouling performance is maintained for a long time even after repeated use.

The fluorine-based UV-curable functional group-containing compound preferably has 1 to 6 UV-curable functional groups.

The fluorine-based UV-curable functional group-containing compound may be contained in an amount of 1 to 40 wt%, preferably 2 to 40 wt%, based on 100 wt% of the total weight of the composition for forming a surface treatment layer. When the fluorine-based UV-curable functional group-containing compound is contained in an amount within the above range, it is preferable because it is possible to impart excellent abrasion resistance and antifouling effects.

If the content of the UV-curable functional group-containing compound is lower than the lower limit of the above range, it may be difficult to achieve sufficient abrasion resistance or antifouling properties, and if the content is higher than the upper limit of the above range, hardness and/or scratch resistance properties may deteriorate.

In one embodiment of the present disclosure, the photoinitiator is included in order to induce photocuring of the composition for forming a surface treatment layer, and may include, for example, a photoradical initiator capable of forming radicals by light irradiation.

Examples of the photoinitiator include type 1 initiators that generate radicals by decomposition of molecules due to differences in chemical structure or in molecular bond energy, and type 2 initiators that coexist with tertiary amines to induce hydrogen abstraction. For example, the type 1 initiators include acetophenones such as 4-phenoxydichloroacetophenone, 4-t-butyldichloroacetophenone, 4-t-butyltrichloroacetophenone, diethoxyacetophenone, 2-hydroxy-2-methyl-1-phenylpropan-1 -one, 1 -(4-isopropylphenyl)-2-hydroxy-2-methylpropan-1 -one, 1-(4-dodecylphenyl)-2-hydroxy-2-methylpropan-1-one, 4-(2-hydroxyethoxy)-phenyl(2-hydroxy-2-propyl)ketone, and 1-hydroxycyclohexylphenyl ketone; benzoins such as benzoin, benzoin methyl ether, benzoin ethyl ether, and benzyl dimethyl ketal; phosphine oxides; titanocene compounds, etc.

For example, the type 2 initiators include benzophenones such as benzophenone, benzoylbenzoic acid, benzoylbenzoic acid methyl ether, 4-phenylbenzophenone, hydroxybenzophenone, 4-benzol-4'-methyldiphenyl sulfide, and 3,3'-methyl-4-methoxybenzophenone; thioxanthones such as thioxanthone, 2-chlorothioxanthone, 2-methylthioxanthone, 2,4-dimethylthioxanthone, and isopropylthioxanthone, etc.

The above-described photoinitiators may be used alone or in combination of two or more. In addition, the type 1 and type 2 initiators may be used alone or in combination.

The photoinitiator may be contained in an amount of about 0.1 to 10 wt%, preferably about 0.1 to 5 wt%, based on 100 wt% of the total weight of the composition for forming a surface treatment layer. If the content of the photoinitiator is less than 0.1 wt%, sufficient curing may not occur, and thus the mechanical properties and adhesiveness of the surface treatment layer may not be ensured. If the content of the photoinitiator is more than 10 wt%, poor adhesion, cracks, and curling may occur due to curing shrinkage.

In one embodiment of the present disclosure, the solvent may be used without limitation as long as it is a solvent known in the art that can dissolve or disperse the composition mentioned above. In addition, the solvent also serves to provide time for the fluorine-based UV-curable functional group-containing compound to rise to the outermost surface of the coating layer due to the difference in surface tension during the process of applying the composition for forming a surface treatment layer to the substrate and drying the same.

Preferred examples of usable solvents include alcohol-based solvents (methanol, ethanol, isopropanol, butanol, methyl cellusolve, ethyl solusolve, etc.), ketone-based solvents (methyl ethyl ketone, methyl butyl ketone, methyl isobutyl ketone, diethyl ketone, dipropyl ketone, cyclohexanone, etc.), acetate-based solvents (ethyl acetate, propyl acetate, n-butyl acetate, t-butyl acetate, methyl cellosolve acetate, ethyl cellosolve acetate, propylene glycol monomethyl ether acetate, propylene glycol monoethyl ether acetate, propylene glycol monopropyl ether acetate, methoxybutyl acetate, methoxypentyl acetate, etc.), hexane-based solvents (hexane, heptane, octane, etc.), benzenes (benzene, toluene, xylene, etc.), ether-based solvents (diethylene glycol dimethyl ether, diethylene glycol diethyl ether, diethylene glycol dipropyl ether, diethylene glycol dibutyl ether, propylene glycol monomethyl ether, etc.), and the like. The solvents exemplified above may be used alone or in combination of two or more.

The solvent may be contained in an amount of 10 to 50 wt%, preferably 20 to 50 wt%, based on 100 wt% of the total weight of the composition for forming a surface treatment layer. If the content of the solvent is lower than the lower limit of the above range, the viscosity of the composition is high, which may reduce workability and make it difficult to sufficiently swell the substrate. On the other hand, if the content of the solvent is higher than the upper limit of the above range, problems arise in that the drying process takes a long time and economic efficiency is reduced. Therefore, the content of the solvent is appropriately selected within the above range.

In one embodiment of the present disclosure, the composition for forming a surface treatment layer may further include other light-transmitting resin, in addition to the hydroxyl group-containing light-transmitting resin.

The other light-transmitting resin may include a photocurable (meth)acrylate oligomer and/or a monomer.

As the photocurable (meth)acrylate oligomer, epoxy (meth)acrylate, urethane (meth)acrylate, or the like is commonly used, and urethane (meth)acrylate is preferred. Urethane (meth)acrylate may be produced by reacting a (meth)acrylate having a hydroxy group in the molecule with a compound having an isocyanate group in the presence of a catalyst. Specific examples of the (meth)acrylates having a hydroxy group in the molecule include 2-hydroxyethyl (meth)acrylate, 2-hydroxyisopropyl (meth)acrylate, 4-hydroxybutyl (meth)acrylate, caprolactone ring-opened hydroxyacrylate, pentaerythritol tri(meth)acrylate, pentaerythritol tetra(meth)acrylate, dipentaerythritol penta(meth)acrylate, dipentaerythritol hexa(meth)acrylate, etc. In addition, specific examples of the compounds having an isocyanate group include 1,4-diisocyanatobutane, 1,6-diisocyanatohexane, 1,8-diisocyanatooctane, 1,12-diisocyanatododecane, 1,5-diisocyanato-2-methylpentane, trimethyl-1,6-diisocyanatohexane, 1,3-bis(isocyanatomethyl)cyclohexane, trans-1,4-cyclohexene diisocyanate, 4,4'-methylenebis(cyclohexylisocyanate), isophorone diisocyanate, toluene-2,4-diisocyanate, toluene-2,6-diisocyanate, xylene-1,4-diisocyanate, tetramethylxylene-1,3-diisocyanate, 1-chloromethyl-2,4-diisocyanate, 4,4'-methylenebis(2,6-dimethylphenylisocyanate), 4,4'-oxybis(phenylisocyanate), a trifunctional isocyanate derived from hexamethylene diisocyanate, trimethylolpropane adduct of toluene diisocyanate, etc.

As the monomer, a conventional one may be without limitation, and a monomer having an unsaturated group such as a (meth)acryloyl group, a vinyl group, a styryl group, or an allyl group in the molecule as a photocurable functional group is preferable. Thereamong, a monomer having a (meth)acryloyl group is preferable.

As a specific example, the monomer having a (meth)acryloyl group may be at least one selected from the group consisting of neopentyl glycol acrylate, 1,6-hexanediol di(meth)acrylate, propylene glycol di(meth)acrylate, triethylene glycol di(meth)acrylate, dipropylene glycol di(meth)acrylate, polyethylene glycol di(meth)acrylate, polypropylene glycol di(meth)acrylate, trimethylolpropane tri(meth)acrylate, trimethylol ethane tri(meth)acrylate, 1,2,4-cyclohexane tetra(meth)acrylate, pentaerythritol tetra(meth)acrylate, dipentaerythritol hexa(meth)acrylate, isooctyl (meth)acrylate, isodexyl (meth)acrylate, stearyl (meth)acrylate, tetrahydrofurfuryl (meth)acrylate, phenoxyethyl (meth)acrylate, and isoborneol (meth)acrylate.

The photocurable (meth)acrylate oligomers and monomers, which are other light-transmitting resins exemplified above, may be used alone or in combination of two or more.

The other light-transmitting resin may be contained in an amount of 1 to 50 wt% based on 100 wt% of the total weight of the composition for forming a surface treatment layer, without being particularly limited thereto.

In addition to the above-mentioned components, the composition for forming a surface treatment layer may further contain components commonly used in the art, such as a leveling agent, a UV stabilizer, a heat stabilizer, an antioxidant, a surfactant, a lubricant, an antifouling agent, etc.

The surface treatment layer may be formed by applying the composition for forming a surface treatment layer to one or both surfaces of the substrate, and drying the same, followed by UV curing.

The substrate may be coated with the composition for forming a surface treatment layer by appropriately using a known coating process such as a die coater, air knife coating, reverse roll coating, spray coating, blade coating, casting, gravure coating, microgravure coating, or spin coating process.

After applying the composition for forming a surface treatment layer to the substrate, the composition is dried by evaporating the volatile matter at a temperature of 30 to 150°C for 10 seconds to 1 hour, more specifically for 30 seconds to 30 minutes, and then cured by irradiation with UV light. The dose of irradiation with UV light may be specifically about 0.01 to 10 J/cm², more specifically 0.1 to 2 J/cm².

In this case, the thickness of the surface treatment layer formed may be specifically 5 to 30 µm, more specifically 5 to 20 µm. When the thickness of the surface treatment layer is within the above range, excellent hardness and flexural resistance may be obtained.

The pressure sensitive adhesive layer 400 provided on one surface of the second polarizing plate enables the transmittance variable optical laminate of the present disclosure to be easily attachable to and detachable from a substrate (an adherend, automobile glass, etc.), and at the same time, serves to control the surface hardness of the transmittance variable optical laminate.

The transmittance variable optical laminate of the present disclosure preferably has a surface hardness of H or higher in order to prevent damage when being attached to or detached from a target substrate and to ensure flexural resistance.

To this end, the pressure sensitive adhesive layer preferably has a storage modulus of 10 MPa or more, more preferably 50 MPa or more, at 25°C. If the pressure sensitive adhesive layer has a storage modulus of less than 10 MPa at 25°C, problems may arise in that the surface hardness of the optical laminate of the present disclosure becomes less than H, and the flexural resistance is not ensured, which may cause the pressure sensitive adhesive layer to be damaged or lifted.

The pressure sensitive adhesive layer may be formed from a pressure sensitive adhesive composition including an acrylic random copolymer and a tackifier.

The acrylic random copolymer may be produced by polymerizing 5 to 30 wt% of a first monomer having a homopolymer glass transition temperature of -40°C or lower, 60 to 90 wt% of a second monomer having a homopolymer glass transition temperature of 80°C or higher, and 3 to 20 wt% of a third monomer having at least one of a hydroxyl group and a carboxylic acid group in the molecule.

The acrylic random copolymer preferably has a glass transition temperature of 0°C or higher, more preferably 0 to 25°C. In this case, there is an advantage in that the pressure sensitive adhesive layer formed from the pressure sensitive adhesive composition has improved elasticity while having excellent adhesiveness and spreadability, thereby exhibiting improved elasticity and adhesiveness.

Meanwhile, the acrylic random copolymer may have an acid value of 0.1 or less. If the acid value of the acrylic random copolymer is more than 0.1, the tackifier described below may act as a crosslinking agent for the monomers of the acrylic random copolymer and for oligomers during the polymerization reaction, rather than improving the adhesiveness of the pressure sensitive adhesive composition, thereby increasing the crosslinking degree of the copolymer, thus decreasing rather than increasing the adhesiveness of the adhesive layer.

The first monomer having a glass transition temperature of -40°C or lower is not particularly limited, but may include, for example, at least one selected from the group consisting of n-butyl acrylate, t-butyl acrylate, sec-butyl acrylate, pentyl acrylate, 2-ethylbutyl acrylate, 2-ethylhexylacrylate, 2-ethylhexyl diglycol acrylate, n-octyl acrylate, isooctyl acrylate, isononyl acrylate, lauryl acrylate, and tetradecyl acrylate.

The first monomer may be included in an amount of 5 to 30 wt%, preferably 10 to 30 wt%, more preferably 15 to 20 wt%, based on the total weight of the monomers used in the polymerization for producing the acrylic random copolymer. If the first monomer is included in an amount of less than 5 wt% during the polymerization for producing the acrylic random copolymer, there is a problem in that the pressure sensitive adhesive composition becomes a film when cured, making it difficult to function as a pressure sensitive adhesive layer. If the first monomer is included in an amount of more than 30 wt%, there is a problem in that the glass transition temperature of the copolymer is excessively reduced, making it difficult to exhibit high elasticity characteristics.

In addition, the second monomer having a glass transition temperature of 80°C or higher is not particularly limited, but may include, for example, at least one selected from the group consisting of (meth)acryloylmorpholine, N-vinylpyrrolidone, isobornyl(meth)acrylate, methacrylate, carbazole acrylate, dihydrodicyclopentadienyl acrylate, and potassium acrylate.

The second monomer may be included in an amount of 65 to 90 wt%, more preferably 70 to 80 wt%, based on the total weight of the monomers used in the polymerization for producing the acrylic random copolymer. If the second monomer is included in an amount of less than 65 wt% during the polymerization for producing the acrylic random copolymer, there is a problem in that the glass transition temperature of the pressure sensitive adhesive composition is excessively reduced, making it difficult to exhibit high elasticity characteristics, and if the second monomer is included in an amount of more than 90 wt%, there is a problem in that the pressure sensitive adhesive composition becomes a film when cured, making it difficult to function as a pressure sensitive adhesive layer.

In addition, the third monomer having at least one of a hydroxyl group and a carboxylic acid group in the molecule may include at least one selected from the group consisting of a (meth)acrylic monomer having a hydroxyl group in the molecule and a (meth)acrylic monomer having a carboxylic acid group in the molecule.

The (meth)acrylic monomer having a hydroxyl group is not particularly limited, but may include, for example, at least one selected from the group consisting of 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 2-hydroxyethylene glycol (meth)acrylate, and 2-hydroxypropylene glycol (meth)acrylate.

The (meth)acrylic monomer having a carboxylic acid group is not particularly limited, but may include, for example, at least one selected from the group consisting of (meth)acrylic acid, 2-(meth)acryloyloxyacetic acid, 3-(meth)acryloyloxypropyl acid, 4-(meth)acryloyloxybutyric acid, an acrylic acid dimer, itaconic acid, maleic acid, and maleic anhydride.

The third monomer may be included in an amount of 3 to 15 wt%, preferably 5 to 10 wt%, based on the total weight of the monomers used in the polymerization for producing the acrylic random copolymer. If the third monomer is included in an amount of less than 3 wt% during the polymerization for producing the acrylic random copolymer, there is a problem in that the degree of crosslinking of the pressure sensitive adhesive layer formed from the pressure sensitive adhesive composition is excessively low, resulting in insufficient durability and adhesiveness. If the third monomer is included in an amount exceeding 15 wt%, there is a problem in that the glass transition temperature of the copolymer is excessively low, making it difficult to exhibit high elasticity characteristics.

The first monomer and the second monomer may be distinct from the third monomer, and the first monomer and the second monomer may not have at least one of a hydroxyl group and a carboxylic acid group in the molecule.

The acrylic random copolymer may further include other monomers commonly used in the art to which the present disclosure pertains, in addition to the above-described monomers, within a range that does not reduce elasticity and adhesiveness.

The acrylic random copolymer may have a weight-average molecular weight (in terms of polystyrene; Mw) of 300,000 to 2 million, more preferably 500,000 to 1.2 million, as measured by gel permeation chromatography (GPC). If the weight-average molecular weight of the acrylic random copolymer is less than 300,000, the chain structure within the structure of the pressure sensitive adhesive sheet after UV polymerization and curing is simple and short in length, which is disadvantageous in terms of reliability due to the occurrence of bubbles, and deterioration of durability due to discoloration, etc. may occur. If the weight-average molecular weight is more than 2 million, the viscosity of the adhesive resin composition is excessively high during the formation of the pressure sensitive adhesive film, and thus a high degree of dilution of the monomers is required for adjustment to the appropriate viscosity required for the formation, and accordingly, high energy may be required during UV polymerization and curing, or unreacted monomers may remain.

The method for producing the acrylic random copolymer is not particularly limited. For example, methods such as bulk polymerization, solution polymerization, emulsion polymerization, suspension polymerization, UV polymerization, and the like, which are commonly used in the art to which the present disclosure pertains, may be used. Preferably, solution polymerization or UV polymerization may be used.

The tackifier included in the pressure sensitive adhesive composition including the acrylic random copolymer may function to improve the adhesiveness and tackiness of an adhesive layer formed from the pressure sensitive adhesive composition.

The tackifier may have a weight-average molecular weight of 1,000 or less. When the tackifier having a weight-average molecular weight of 1,000 or less is used, uniform wettability and adhesiveness may be ensured.

Although the tackifier is not particularly limited as long as it may improve the adhesiveness and/or tackiness of an adhesive layer formed from the pressure sensitive adhesive composition, it may include, for example, at least one selected from the group consisting of an isocyanate-based compound, an aziridine-based compound, an epoxy-based compound, a melamine-based compound, a peroxide-based compound, a metal chelate-based compound, and an oxazoline-based compound.

The isocyanate-based compound may include at least one selected from the group consisting of diisocyanate compounds such as xylene diisocyanate, hexamethylene diisocyanate, isophorone diisocyanate, and tetramethylxylene diisocyanate; an addition polymer obtained by reacting 3 mol of a diisocyanate compound with 1 mol of a polyhydric alcohol compound such as trimethylolpropane; an isocyanurate polymer obtained by self-polycondensation of 3 mol of a diisocyanate compound; a biuret body obtained by condensing a diisocyanate urea, obtained from 2 mol of a diisocyanate compound, with 1 mol of a diisocyanate; and a polyfunctional isocyanate compound containing three functional groups, such as triphenylmethane triisocyanate or methylene bis(triisocyanate).

The aziridine-based compound may include at least one selected from the group consisting of pentaerythrol-tris(beta-(N-aziridinyl)propionate, trimethylolpropane-tris(beta-N-aziridinyl)propionate, trimethylolpropane tris(2-methyl-1-aziridinepropionate), N,N'-toluene-2,4-bis(1-aziridinecarboxamide), N,N'-diphenylmethane-4,4'-bis(1-aziridinecarboxamide), triethylene melamine, bis(isophthaloyl)-1-(2-methylaziridine), and tri-(1-aziridinyl)phosphine oxide.

The epoxy-based compound may include at least one selected from the group consisting of ethylene glycol diglycidyl ether, polyethylene glycol diglycidyl ether, glycerin diglycidyl ether, glycerin triglycidyl ether, 1,6-hexanediol diglycidyl ether, trimethylolpropane triglycidyl ether, sorbitol polyglycidyl ether, polyglycerol polyglycidyl ether, and pentaerythritol polyglycidyl erythritol.

The melamine-based compound may include at least one selected from the group consisting of hexamethoxymethylmelamine, hexaethoxymethylmelamine, hexapropoxymethylmelamine, hexabutoxymethylmelamine, hexapentyloxymethylmelamine, and hexahexyloxymethylmelamine.

The peroxide-based compound may include at least one selected from the group consisting of di(2-ethylhexyl)peroxydicarbonate, di(4-t-butylcyclohexyl)peroxydicarbonate, di-sec-butyl peroxydicarbonate, t-butyl peroxyneodecanoate, t-hexyl peroxypivalate, t-butyl peroxypivalate, dilauroyl peroxide, di-n-octanoyl peroxide, 1,1,3,3-tetramethylbutylperoxy-2-ethylhexanoate, di(4-methylbenzoyl)peroxide, dibenzoyl peroxide, t-butyl peroxyisobutyrate, and 1,1-di(t-hexylperoxy)cyclohexane.

Examples of the metal chelate-based compound include a compound in which at least one ligand of a compound in which a polyvalent metal is covalently or coordinately bonded to an organic compound is substituted with an alkoxy group. The polyvalent metal may be one selected from the group consisting of titanium, zirconium, aluminum, zinc, iron, and tin, and is preferably any one selected from the group consisting of titanium, zirconium, and aluminum. Examples of the atoms in the organic compound which is covalently or coordinately bonded include oxygen atoms, and the organic compound may be any one selected from the group consisting of alkyl esters, alcohol compounds, carboxylic acid compounds, ether compounds, and ketone compounds.

The oxazoline-based compound may include at least one selected from the group consisting of 2-isopropyl-2-oxazoline, 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, and 2-isopropenyl-5-ethyl-2-oxazoline.

The tackifier may be included in an amount of 2 parts by weight or more, preferably 2 to 20 parts by weight, based on 100 parts by weight of the acrylic random copolymer. When the tackifier satisfies the above content range, the adhesiveness and tackiness of the adhesive composition may be further improved.

If the tackifier is included in an amount of less than 2 parts by weight based on 100 parts by weight of the acrylic random copolymer, adhesiveness and tackiness to the substrate may be reduced, and if the tackifier is included in an amount of more than 20 parts by weight, elasticity may be reduced due to the residual compound.

In addition to the above-described components, the composition for forming an pressure sensitive adhesive layer may further include additives to enhance coating properties, adhesiveness, etc., as required by those skilled in the art, within a range that does not impair the purpose of the present disclosure. To this end, the composition may further include components commonly used in the art, for example, a surfactant, a silane coupling agent, an antioxidant, a UV absorber, and/or an anti-coagulant. These components may be used alone or in any combination of two or more at any ratio.

The thickness of the pressure sensitive adhesive layer 400 may be 5 to 80 µm. When the thickness of the pressure sensitive adhesive layer is within the above range, the adhesive layer has excellent adhesiveness and is advantageous in terms of light transmittance, reliability, and level difference absorbability.

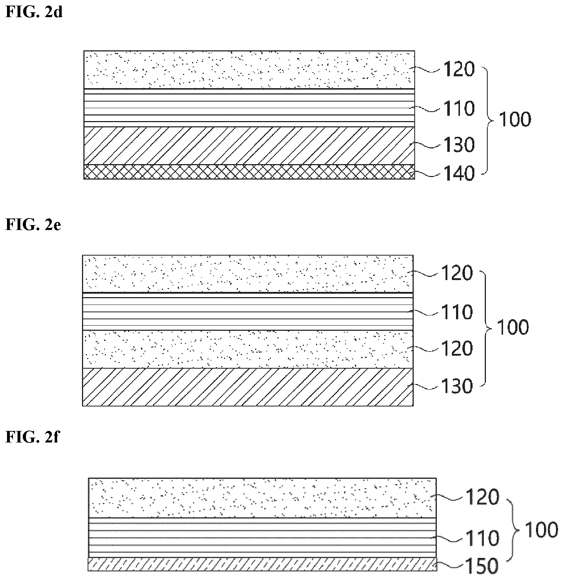

Referring to FIG. 2, a polarizing plate 100 includes a polarizer 110, and may further include functional layers, such as a protective layer 120, a retardation matching layer 130, a refractive index-matching layer 140, and an adhesion-imparting layer 150, on one or both surfaces of the polarizer (110).

For example, the polarizing plate 100 may include a polarizer 110 and a protective layer 120 laminated on one or both surfaces of the polarizer 110 (see FIGS. 2a and 2b), or may include a polarizer 110, a protective layer 120 laminated on one surface of the polarizer 110, and a retardation matching layer 130 laminated on the other surface opposite to the one surface of the polarizer 110 (see FIG. 2c), or may include a polarizer 110, a protective layer 120 laminated on one surface of the polarizer, and a retardation matching layer 130 and a refractive index-matching layer 140 sequentially laminated on the other surface opposite to the one surface of the polarizer 110 (see FIG. 2d), or may include a polarizer 110, a protective layer 120 laminated on one surface of the polarizer, and a protective layer 120 and a retardation matching layer 130 sequentially laminated on the other surface opposite to the one surface of the polarizer 110 (see FIG. 2e), or may include a protective layer 120 laminated on one surface of the polarizer 110 and an adhesion-imparting layer 150 laminated on the other surface (see FIG. 2f).

The polarizer 110 may be a conventional or later-developed polarizer, and may be, for example, a stretched polarizer or a coated polarizer.

In one embodiment, the stretched polarizer may include a stretched polyvinyl alcohol (PVA)-based resin. The polyvinyl alcohol (PVA)-based resin may be a polyvinyl alcohol-based resin obtained by saponifying a polyvinyl acetate-based resin. Examples of the polyvinyl acetate-based resin include polyvinyl acetate, which is a homopolymer of vinyl acetate, as well as copolymers of vinyl acetate and other monomers copolymerizable therewith. Examples of the other monomers include unsaturated carboxylic acid-based monomers, unsaturated sulfonic acid-based monomers, olefin-based monomers, vinyl ether-based monomers, acrylamide-based monomers having an ammonium group, and the like. In addition, the polyvinyl alcohol (PVA)-based resin may include a modified resin, for example, aldehyde-modified polyvinyl formal or polyvinyl acetal.

In one embodiment, the coated polarizer may be formed by a liquid crystal coating composition, wherein the liquid crystal coating composition may include a reactive liquid crystal compound, a dichroic dye, and the like.

The term "reactive liquid crystal compound" may refer to a compound including, for example, a mesogen skeleton and also including one or more polymerizable functional groups. Such reactive liquid crystal compounds are variously known under the name reactive mesogen (RM). The reactive liquid crystal compound may be polymerized by light or heat to form a cured film in which a polymer network is formed while maintaining the liquid crystal alignment.

The reactive liquid crystal compound may be a monofunctional or multifunctional reactive liquid crystal compound. The monofunctional reactive liquid crystal compound may refer to a compound having one polymerizable functional group, and the multifunctional reactive liquid crystal compound may refer to a compound having two or more polymerizable functional groups.

The dichroic dye is a component included in the liquid crystal coating composition to impart polarization properties, and has different absorbances in the major and minor axis directions of the molecule. The dichroic dyes may be a conventional or later-developed dichroic dye, and may include at least one selected from the group consisting of azo dyes, anthraquinone dyes, perylene dyes, merocyanine dyes, azomethine dyes, phthaloperylene dyes, indigo dyes, dioxadine dyes, polythiophene dyes, and phenoxazine dyes.

The liquid crystal coating composition may further include a solvent capable of dissolving the reactive liquid crystal compound and the dichroic dye, and examples of the solvent include propylene glycol monomethyl ether acetate (PGMEA), methyl ethyl ketone (MEK), xylene, and chloroform. In addition, the liquid crystal coating composition may further include a leveling agent, a polymerization initiator, and the like, within a range that does not impair the polarization characteristics of the coating film.

The protective layer 120 serves to protect the polarization characteristics of the polarizer 110 from post-processing and external environments, and may be provided in the form of a protective film, etc.

The protective layer 120 may be formed on and in direct contact with one or both surfaces of the polarizer 110, as shown in FIGS. 2a and 2b, without being limited thereto. For example, the protective layer may have a multi-layer structure in which one or more protective layers are continuously laminated, and may be formed in direct contact with other functional layer(s).

In one or more embodiments, the protective layer 120 may include at least one selected from the group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene(PP), polymethyl acrylate (PMA), polymethyl methacrylate (PMMA), polyethyl acrylate (PEA), polyethyl methacrylate (PEMA), and cyclic olefin polymer (COP).

The retardation matching layer 130 is intended to match the optical properties of the optical laminate, may be in the form of a retardation film or the like, and may be a conventional or later-developed retardation film. For example, quarter-wave plates or half-wave plates may be used to retard the phase of light, and these may be used alone or in combination.

The retardation matching layer 130 may be formed on and in direct contact with one surface of the polarizer 110, as shown in FIGS. 2c and 2d, without being limited thereto. For example, as shown in FIG. 2e, the retardation matching layer 130 may be formed on one surface of the protective layer 120, so that the polarizer 110, the protective layer 120, and the retardation matching layer 130 may be sequentially laminated.

The retardation matching layer 130 may include either a stretched polymer film obtained by stretching a polymer film capable of imparting optical anisotropy in an appropriate manner, or a liquid crystal polymer film.

In one embodiment, the stretched polymer film may include a polymer layer including a polyolefin such as polyethylene (PE) or polypropylene (PP), a cyclic olefin polymer (COP) such as polynorbornene, a polyester such as polyvinyl chloride (PVC), polyacrylonitrile (PAN), polysulfone (PSU), acrylic resin, polycarbonate (PC), or polyethylene terephthalate(PET), a cellulose acetate-based polymer such as polyacrylate, polyvinyl alcohol (PVA) or triacetyl cellulose (TAC), or a copolymer of two or more monomers among the monomers forming the polymers.

The method of obtaining the stretched polymer film is not particularly limited, and for example, the stretched polymer film may be obtained by forming the polymer material into a film form, followed by stretching. The method for forming the polymer material into a film form is not particularly limited, and the polymer material may be formed into a film by a known method such as injection molding, sheet molding, blow molding, injection blow molding, inflation molding, extrusion molding, foam molding, cast molding, or the like. In addition, a secondary processing molding method such as pressure molding or vacuum molding may also be used. Thereamong, extrusion molding or cast molding is preferably used. In this case, for example, an unstretched film may be extrusion-molded using an extruder equipped with a T-die, a circular die, or the like. When a molded product is obtained by extrusion molding, a material prepared by melt-kneading various resin components, additives, etc. may be used and the molded product may be formed by melt-kneading during extrusion molding. Furthermore, after various resin components are dissolved using a common solvent, for example, a solvent such as chloroform or methylene chloride, an unstretched film may be cast-molded by cast drying and solidification.

The stretched polymer film may be provided by performing uniaxial stretching on the formed film in a mechanical direction (MD, longitudinal or lengthwise direction), and by performing uniaxial stretching in a transverse direction (TD, or widthwise direction) perpendicular to the MD. Alternatively, a biaxially stretched film may be manufactured by performing stretching by a sequential biaxial stretching method of roll stretching and tenter stretching, a simultaneous biaxial stretching method of tenter stretching, a biaxial stretching method of tubular stretching, or the like.

The liquid crystal polymer film may include a reactive liquid crystal compound in a polymerized state. The above description of the reactive liquid crystal compound of the coated polarizer may be equally applied to the reactive liquid crystal compound.

In one or more embodiments, the thickness of the retardation matching layer 130 may be 10 µm to 100 µm in the case of the stretched polymer film, and 0.1 µm to 5 µm in the case of the liquid crystal polymer film.

The refractive index-matching layer 140 is provided to compensate for the refractive index difference of the optical laminate caused by the transparent conductive layer 200, and may serve to improve the viewing characteristics, etc. by reducing the refractive index difference. Furthermore, the refractive index-matching layer 140 may be provided to correct the color caused by the transparent conductive layer 200. Meanwhile, when the transparent conductive layer has a pattern, the refractive index matching layer 140 may compensate for the difference in transmittance between a pattern region with the pattern formed and a non-pattern region where no pattern is formed.

Specifically, the transparent conductive layer 200 is laminated adjacent to other members having a refractive index different therefrom (for example, the polarizer 110, etc.), and the difference in the refractive index between the transparent conductive layer and other layer adjacent thereto may lead to the difference in light transmittance. In particular, if a pattern is formed on the transparent conductive layer, a problem may arise in that the pattern region and the non-pattern region are viewed to be distinguishable from each other. Therefore, the refractive index-matching layer 140 is included to compensate for refractive index, thereby reducing the difference in light transmittance of the optical laminate. In particular, when a pattern is formed on the transparent conductive layer, the refractive index-matching layer 140 prevents the pattern region and the non-pattern region from being viewed to be distinguishable from each other.

In one embodiment, the refractive index of the refractive index-matching layer 240 may be appropriately selected depending on the material of another adjacent member, but is preferably 1.4 to 2.6, more preferably 1.4 to 2.4. In this case, it is possible to prevent light loss caused by a sharp difference in refractive index between the transparent conductive layer 200 and other members such as the polarizer 110.

The refractive index-matching layer 140 is not particularly limited as long as it can prevent the sharp difference in refractive index between the transparent conductive layer 200 and other members such as the polarizer 110, and it may include a compound used in the formation of a conventional or later-developed refractive index matching layers. For example, the refractive index matching layer may be formed from a refractive index-matching layer formation composition including a polymerizable isocyanate compound.

The adhesion-imparting layer 150 is preferably formed on the liquid crystal layer 300 side of the polarizer 110, that is, on the inner side of the polarizer 110. For example, the adhesion-imparting layers may be provided on the inner sides of the first polarizer 110-1 and the second polarizer 110-2 and arranged to face each other.

In this case, the adhesion-imparting layer 150 is formed in direct contact with the transparent conductive layer 200 and may act as a primer to prevent adhesion to the transparent conductive layer 200 described below from deteriorating.

In addition, the adhesion-imparting layer 150 has the advantage of minimizing cracks or scratches, which occur in the process of manufacturing the optical laminate, by providing a level of hardness suitable for forming the transparent conductive layer 200 on the polarizing plate 100.

In one embodiment, the polarizing plate 100 may further include other functional layers to assist or enhance the characteristics of the polarizer, in addition to the above-mentioned functional layers and, for example, may further include an overcoat layer or a hard coating layer in order to further improve the mechanical durability.

The thickness of each of the functional layers other than the retardation matching layer 130 may be 1 to 30 µm, more preferably 2 to 20 µm. Here, the thickness may refer to the thickness after drying. When each thickness satisfies the above range, each functional layer may perform its function without a problem while thinning is possible.

In one or more embodiments, the polarizing plate 100 may have a thickness of 30 µm to 200 µm, preferably 30 µm to 170 µm, more preferably 50 µm to 150 µm. In this case, the polarizing plate 100 may maintain its optical characteristics while an optical laminate having a small thickness may be manufactured.

In particular, the polarizing plate 100 included in the optical laminate of the present disclosure is characterized in that, within the above-described thickness range, the thickness of the first polarizing plate 100-1 is greater than or equal to the thickness of the second polarizing plate 100-2. That is, when the thickness of the first polarizing plate 100-1 corresponding to the outer portion of the optical laminate is equal to or greater than the thickness of the second polarizing plate 100-2 corresponding to the inner portion of the optical laminate, there is an advantage in that deformation due to changes in the external environment, such as temperature and humidity, may be suppressed. This may reduce the difference in shrinkage and expansion rates between the first polarizing plate and the second polarizing plate, thereby preventing problems such as poor driving and lifting of the liquid crystal layer.

The transparent conductive layer 200 is provided for driving the liquid crystal layer 300 and may be formed in direct contact with the polarizing plate 100.

For example, as shown in FIG. 1, the first transparent conductive layer 200-1 may be formed in direct contact with the first polarizing plate 100-1, and the second transparent conductive layer 200-2 may be formed in direct contact with the second polarizing plate 100-2.

Conventionally, an optical laminate used to manufacture a smart window, etc. is manufactured by forming a conductive layer for driving liquid crystals on one surface of a substrate and bonding the other surface of the substrate to a polarizing plate. However, the transmittance variable optical laminate according to the present disclosure is characterized in that, since the conductive layer is directly formed on one surface of the polarizing plate without including a separate substrate for forming the conductive layer, the laminate has improved transmittance in a light transmission mode and improved flexural properties while having a reduced thickness.

In one embodiment, the first transparent conductive layer 200-1 and/or the second transparent conductive layer 200-2 formed in direct contact with at least one of the first polarizing plate 100-1 and the second polarizing plate 100-2 shares a contact surface with the first polarizing plate 100-1 and/or the second polarizing plate 100-2, meaning that at least one of the transparent conductive layers is formed on the polarizing plate without including a separate substrate. For example, the first transparent conductive layer 200-1 and/or the second transparent conductive layer 200-2 may be deposited and formed on the upper surface of a coating layer formed on the first polarizing plate 100-1 and/or the second polarizing plate 100-2. In this case, the first transparent conductive layer 200-1 and/or the second transparent conductive layer 200-2 may be formed in direct contact with a pretreated surface of the polarizing plate after performing pre-treatment such as corona treatment or plasma treatment on one surface of the polarizing plate in order to improve the adhesion thereof to at least one of the first polarizing plate 100-1 and the second polarizing plate100-2. The pre-treatment is not limited to corona treatment or plasma treatment, and may be any conventional or later-developed pre-treatment process that does not impair the purpose of the present disclosure.

In another embodiment of the present disclosure, the first transparent conductive layer 200-1 and/or the second transparent conductive layer 200-2, which are/is formed in direct contact with at least one of the first polarizing plate 100-1 and the second polarizing plate 100-2, may be formed in direct contact with the polarizing plate with a highly adhesive layer as a primer (not shown) interposed therebetween in order to improve the adhesion between the transparent conductive layer and the polarizing plate. The highly adhesive layer may be formed using a conventional or later-developed pressure sensitive adhesive. In one or more embodiments, the adhesive may be an acrylic pressure sensitive adhesive, a rubber-based pressure sensitive adhesive, a silicone-based pressure sensitive adhesive, a urethane-based pressure sensitive adhesive, a polyvinyl alcohol-based pressure sensitive adhesive, a polyvinyl pyrrolidone-based pressure sensitive adhesive, a polyacrylamide-based pressure sensitive adhesive, a cellulose-based pressure sensitive adhesive, a vinyl alkyl ether-based pressure sensitive adhesive, or the like. The pressure sensitive adhesive is not particularly limited as long as it has adhesive and viscoelastic properties. However, the pressure sensitive adhesive may preferably be an acrylic pressure sensitive adhesive from the viewpoint of ease availability, etc., and may include, for example, a (meth)acrylate copolymer, a crosslinking agent, a solvent, etc.

The transparent conductive layer 200 may be formed on one surface of the polarizing plate 100 by a deposition and coating method commonly used in art. For example, it may be formed by an appropriate process selected from coating processes such as a spin coating process, a roller coating process, a bar coating process, a dip coating process, a gravure coating process, a curtain coating process, a die coating process, a spray coating method, a doctor coating method, a kneader coating method, etc.; printing (application) processes such as a screen printing process, a spray printing process, an inkjet printing process, an iron plate printing process, an intaglio printing process, a flat printing process, etc.; and deposition processes such as a chemical vapor deposition (CVD), physical vapor deposition (PVD), and plasma-enhanced chemical vapor deposition (PECVD), etc.

In the transmittance variable optical laminate of the present disclosure, at least one of the first transparent conductive layer 200-1 and the second transparent conductive layer 200-2 preferably has a visible light transmittance of 50% or more, and for example, may include at least one selected from the group consisting of a transparent conductive oxide, a metal, a carbonaceous material, a conductive polymer, a conductive ink, and nanowires, without being limited thereto, and a conventional or later-developed transparent conductive layer material may be used.

In one or more embodiments, the transparent conductive oxide may include at least one selected from a group consisting of indium tin oxide (ITO), indium zinc oxide (IZO), indium zinc tin oxide (IZTO), aluminum zinc oxide (AZO), gallium zinc oxide (GZO), fluorine tin oxide (FTO), zinc oxide (ZnO), and the like.

Furthermore, the metal may include at least one selected from a group consisting of gold (Au), silver (Ag), copper (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), and alloys containing at least one of these metals, and may include, for example, a silver-palladium-copper (APC) alloy or a copper-calcium (CuCa) alloy.

The carbonaceous material may include at least one selected from the group consisting of carbon nanotubes (CNTs), and graphene.

The conductive polymer may be a conventional or later-developed conductive polymer material. For example, the conductive polymer may include at least one selected from the group consisting of polythiophene, poly(3,4-ethylenedioxythiophene), polyaniline, polyacetylene, polydiacetylene, polyphenylene, polyphenylene vinylene, polyphenylene sulfide, polythienylene vinylene, polythiophene vinylene, polyfluorene, polypyrrole, poly(3,4-ethylenedioxythiophene): polystyrene sulfonate, poly(3,4-ethylenedioxythiophene): camphor sulfonic acid, poly(3,4-ethylenedioxythiophene): toluene sulfonic acid, poly(3,4-ethylenedioxythiophene): dodecylbenzene sulfonic acid, polyaniline: polystyrene sulfonate, polyaniline: camphorsulfonic acid, polypyrrole: polystyrene sulfonate, polypyrrole: camphorsulfonic acid, polypyrrole: toluenesulfonic acid, polypyrrole: dodecylbenzene sulfonic acid, polythiophene: polystyrene sulfonate, polythiophene: camphorsulfonic acid, polythiophene: toluenesulfonic acid, and polythiophene: dodecylbenzene sulfonic acid, and is preferably poly(3,4-ethyl enedi oxythi ophene).

The conductive ink may be a mixture of metal powder and a curable polymeric binder, and the nanowires may be, for example, silver nanowires (AgNWs).

Furthermore, at least one of the first transparent conductive layer 200-1 and the second transparent conductive layer 200-2 may be formed to have a structure consisting of two or more layers by combining the above-described materials. For example, in order to reduce the reflectivity of incident light and increase the transmittance, at least one of the first transparent conductive layer 200-1 and the second transparent conductive layer 200-2 may be formed to have a two-layer structure including a metal layer and a transparent conductive oxide layer.

The transparent conductive layer 200 of the present disclosure may have an alignment film between the same and the liquid crystal layer 300. The alignment film serves to align the liquid crystal compound, and is preferably photo-oriented. The alignment film may be formed by applying and curing an alignment film coating composition containing an alignable polymer, a photopolymerization initiator, and a solvent. The alignable polymer is not particularly limited, but may be a polyacrylate-based resin, a polyamic acid resin, a polyimide-based resin, a polymer containing a cinnamate group, or the like. In addition, a conventional or later-developed polymer capable of exhibiting alignment properties may be used.

The liquid crystal layer 300 included in the transmittance variable optical laminate of the present disclosure may include a polymer network 310 as described below, wherein the polymer network may be formed through a crosslinking reaction of a polymerizable compound. In order to maintain the uniform initial orientation of the liquid crystal compound 320 within the liquid crystal layer when forming the polymer network 310, it is preferable to use an alignment film having strong surface anchoring energy. Methods for forming such an alignment film include a rubbing method using a rubbing process and a photoalignment method using UV light. In general, the photoalignment method has a weaker surface anchoring energy than the rubbing method. More specifically, the alignment film formed by the rubbing method has a surface anchoring energy of about 1 x 10⁻³ J/m², while the alignment film formed by the photoalignment method has a surface anchoring energy of about 1 x 10⁻⁶ J/m². Therefore, in order to maintain the uniform initial alignment of the liquid crystal compound 320 when forming the polymer network 310 within the liquid crystal layer 300, a surface of the second transparent conductive layer 200-2 of the present disclosure, which is in contact with the liquid crystal layer 300, is preferably oriented by rubbing using the rubbing method.

In one embodiment, the transparent conductive layer 200 may have a thickness of 1 µm or less, preferably 10 nm to 500 nm, more preferably 30 nm to 200 nm. In this case, the transparent conductive layer 200 ensures a predetermined transmittance, does not greatly change its characteristics by external stress, and enables the manufacturing of an optical laminate with a small thickness.

The liquid crystal layer 300 may change the driving mode of the optical laminate to a light transmission mode or a light-blocking mode by adjusting the transmittance of light incident in one or more directions in response to an electric field generated by the transparent conductive layer 200.

The liquid crystal layer 300 may include the polymer network 310 and the liquid crystal compound 320. For example, the liquid crystal layer 300 may be provided between the first transparent conductive layer 200-1 and the second transparent conductive layer 200-2 in the light control region and positioned within the space provided by the polymer network 310.

Conventional optical laminates necessarily need to include, within a liquid crystal layer, a sealant and a spacer to maintain a certain space, i.e., a cell gap, in which a liquid crystal compound is provided. However, if a column spacer is included within the liquid crystal layer to maintain the cell gap, there are problems in that the manufacturing process becomes more complicated, which increases the manufacturing cost, and the transmittance changes as the alignment film is damaged in the process of forming the spacer by irradiating the photoresist with UV light. In addition, if a ball spacer is used to maintain the cell gap of the liquid crystal layer, there are problems in that it is impossible to maintain a uniform cell gap, making it difficult to maintain a constant in-plane optical color, and a short circuit occurs in the optical laminate. In addition, if a sealant is used to maintain the cell gap of the liquid crystal layer, there are problems in that the appearance quality may deteriorate due to visibility of the sealant, the sealant may burst during handling of the optical laminate, or a defect may occur due to a difference in thickness from the spacer included together therewith.

As the liquid crystal layer 300 included in the transmittance variable optical laminate of the present disclosure includes the polymer network 310 together with the liquid crystal compound 320, it enables the cell gap of the liquid crystal layer to be appropriately maintained without including a separate sealant and/or spacer. In addition, since the cell gap is maintained by the polymer network alone rather than by a combination of the sealant and the spacer, there is an advantage in that a defect caused by the difference in thickness between the sealant and the spacer may be fundamentally blocked.

The liquid crystal compound is not particularly limited as long as it is driven in response to an electric field and is capable of controlling the light transmittance, and a conventional or later-developed liquid crystal compound may be used. For example, the contents regarding the reactive liquid crystal compound of the above-described coated polarizer may be equally applied to the liquid crystal compound.

The liquid crystal compound may include a chiral nematic (cholesteric) liquid crystal compound, wherein the chiral nematic liquid crystal compound may include a nematic liquid crystal compound and a chiral compound.

In the nematic liquid crystal compound, long-rod-shaped molecules are arranged parallel to each other, and there is no regularity in the center position of the molecules, but the molecules are ordered in the axial direction. Each molecule of the nematic liquid crystal compound may move freely in the long-axial direction, and thus the viscosity is low and the fluidity is good. Since the orientation of each molecule is almost equal up and down, the polarization cancels out and the liquid crystal compound generally does not exhibit ferroelectricity. The type of nematic liquid crystal compound is not particularly limited, and any compound that contains a mesogenic group may be used without limitation.

Chiral compounds are compounds whose three-dimensional structures are symmetrical to each other like the relationship between the left and right hands, and although they have the same chemical structure and physical properties, they have different three-dimensional structures because they are mirror images of each other. When a certain amount of a chiral compound is contained in the nematic liquid crystal compound, it induces a helical pitch. As the type of chiral compound, any chiral compound may be used without particular limitation as long as it can induce a desired helical pitch without damaging the liquid crystal properties of the liquid crystal compound, for example, nematic regularity.

The chiral compound for inducing a helical pitch in the liquid crystal compound needs to contain at least chirality in its molecular structure. Examples of the chiral compound include a compound having one or more asymmetric carbons, a compound having an asymmetric point on a heteroatom, such as a chiral amine or chiral sulfoxide, or a compound having an axially asymmetric, optically active site, such as cumulene or binaphthol.

The chiral compound may be, for example, a low-molecular-weight compound having a molecular weight of 1,500 or less. For example, as the chiral compound, a commercially available chiral nematic liquid crystal, for example, a chiral dopant liquid crystal S-811 commercially available from Merck or Paliocolor LC 756 (manufactured by BASF) may be used, without being limited thereto.

The chiral nematic liquid crystal compound may contain, based on the total weight of the chiral nematic liquid crystal compound, 75 to 99 wt% of the nematic liquid crystal compound and 1 to 25 wt% of the chiral compound, without being limited thereto. The helical pitch of the chiral nematic liquid crystal compound may be controlled by appropriately adjusting the content of the nematic liquid crystal compound and the chiral compound within the above ranges. The pitch of the chiral nematic liquid crystal compound is not particularly limited, but may be 5 to 20 µm.

The liquid crystal driving mode of the liquid crystal layer 300 is not particularly limited, and examples thereof include twisted nematic (TN) mode, super-twisted nematic (STN) mode, in-plane switching (IPS) mode, fringe-field switching (FFS) mode, electrically controlled birefringence (ECB) mode, and vertical alignment (VA) mode. Twisted nematic (TN) mode is preferably used in terms of light transmittance control.

As an example of a conventional liquid crystal layer containing a polymer, a polymer dispersed liquid crystal (PDLC) is known. The polymer dispersed liquid crystal is one in which the liquid crystal compound molecules exist in droplet or capsule form within the polymer. The liquid crystal compound molecules in droplet or capsule form are arranged in an irregular direction and cannot have constant initial alignment. That is, when no voltage is applied to the polymer dispersed liquid crystal (PDLC), the liquid crystal compound molecules are arranged irregularly and scatter the incident light, thereby maintaining an opaque state (light-blocking mode), and when voltage is applied, the liquid crystal compound molecules are aligned in one direction and transmit the incident light, thereby becoming a transparent state (light transmission mode). However, since the light-blocking mode of the polymer dispersed liquid crystal (PDLC) utilizes the property that incident light is scattered by the irregular alignment of liquid crystal compound molecules, there is a technical limitation in that the light-blocking rate is somewhat unsatisfactory because light scattered in a random direction cannot be controlled. In addition, there is a disadvantage in that, since it is necessary to maintain a voltage applied in order to implement the light transmission mode, power consumption is high.

The liquid crystal layer 300 of the present disclosure includes a polymer network 310 and a liquid crystal compound 320, wherein the liquid crystal compound 320 is arranged with uniform initial alignment. The liquid crystal layer 300 of the present disclosure is different from the conventional polymer dispersed liquid crystal (PDLC) in that it includes the polymer network 310 and at the same time, the liquid crystal compound 320 included therein exists mixed with the polymer network 310 without existing in droplet or capsule form and is arranged with uniform initial alignment in the liquid crystal layer. Accordingly, the liquid crystal layer 300 of the present disclosure, which includes the polymer network 310 and the liquid crystal compound 320 arranged with uniform initial arrangement can switch between a light transmission mode and a light-blocking mode by controlling the transmittance of light incident in one or more directions in response to an electric field generated by the transparent conductive layer 200. Therefore, the liquid crystal layer 300 can exhibit a superior light-blocking rate compared to the conventional polymer dispersed liquid crystal that switches to the light-blocking mode by scattering incident light. In addition, the transmittance variable optical laminate of the present disclosure can switch the light-blocking mode without voltage application by appropriately adjusting the transmission axis of the polarizing plate 100 and the optical axis of the liquid crystal layer 300, and also has an advantage of reducing power consumption compared to the conventional polymer dispersed liquid crystal in that the applied voltage required for driving is lower than that of the conventional polymer dispersed liquid crystal in which liquid crystals are arranged in a disorderly manner.

The liquid crystal layer 300 may include a cured product of a composition for forming a liquid crystal layer including a polymerizable monomer and a liquid crystal compound.

The polymerizable monomer refers to a compound that forms a polymer network by a photopolymerization reaction or a thermal polymerization reaction, and is not particularly limited. The polymerizable monomer may include, for example, an acrylate-based monomer, which is at least one selected from the group consisting of isobornyl acrylate, caprolactone acrylate, triethylene glycol diacrylate, trimethylolpropane triacrylate, pentaerythritol triacrylate, and dipentaerythritol pentaacrylate.

The polymerizable monomer may include at least one monomer selected from monofunctional to tetrafunctional monomers, and preferably, may include a trifunctional monomer. The multifunctional monomer has the advantage of not impacting the liquid crystal, having excellent compatibility with the liquid crystal, and being able to exhibit appropriate phase separation from the liquid crystal.

The composition for forming a liquid crystal layer may contain the polymerizable monomer in an amount of 10 to 30 wt%, preferably 10 to 20 wt%, based on the total weight of the composition. When the composition for forming a liquid crystal layer contains the polymerizable monomer in an amount within the above content range, there are advantages in that the degree of curing of the polymer network formed therefrom is sufficient, so that the cell gap of the liquid crystal layer may be stably maintained, and excellent light transmittance and adhesion may be obtained, which is preferable.

The method of forming the liquid crystal layer 300 using the composition for forming a liquid crystal layer is not particularly limited. For example, the liquid crystal layer 300 may be formed by applying the composition for forming a liquid crystal layer onto the second transparent conductive layer 200-2 whose surface has been oriented by rubbing, and then photocuring or thermally curing the same.

Although the transmittance variable optical laminate according to the present disclosure can maintain a stable cell gap even without including a sealant and a spacer by including the polymer network 310 in the liquid crystal layer 300, it may if necessary, further include one or more of a sealant and a spacer within a range that does not impair the purpose of the present disclosure.

The sealant may include a curable resin as a base resin. As the base resin, a UV-curable resin or a thermosetting resin known in the art that may be used for a sealant may be used. The UV-curable resin may be a polymer of a UV-curable monomer. The thermosetting resin may be a polymer of a thermosetting monomer.

As the base resin of the sealant, for example, an acrylate-based resin, an epoxy-based resin, a urethane-based resin, a phenol-based resin, or a mixture of these resins may be used. In one embodiment, the base resin may be an acrylate-based resin, wherein the acrylate-based resin may be a polymer of an acrylic monomer. The acrylic monomer may be, for example, a multifunctional acrylate. In another embodiment, the sealant may further include a monomer component in addition to the base resin. The monomer component may be, for example, a monofunctional acrylate. As used herein, the term "monofunctional acrylate" may mean a compound having one acrylic group, and the term "multifunctional acrylate" may mean a compound having two or more acrylic groups. The curable resin may be cured by UV irradiation and/or heating. The UV irradiation or heating may be appropriately performed under conditions that do not impair the purpose of the present application. If necessary, the sealant may further include an initiator, for example, a photoinitiator or a thermal initiator.

The sealant may be formed by a method commonly used in the art, and for example, may be formed by drawing a sealant into the outer peripheral region (i.e., inactive region) of the liquid crystal layer using a dispenser having a nozzle.

The spacer may include at least one of a ball spacer and a column spacer, and is particularly preferably a ball spacer. The ball spacer may include one or more ball spacers, and preferably has a diameter of 1 to 10 µm. In addition, when viewed in a planar direction, the area occupied by the ball spacer in the liquid crystal layer 300 is preferably 0.01 to 10% of the area of the liquid crystal layer 300 in terms of user's visibility and improved transmittance in the light transmission mode.

The transmittance variable optical laminate of the present disclosure may further include other members within a range that does not impair the purpose of the present disclosure. For example, it may further include a UV-absorbing layer, a hard coating layer, or the like.

The UV-absorbing layer is not particularly limited as long as it prevents UV-induced deterioration of the optical laminate. Examples of the UV absorber forming the UV-absorbing layer include salicylic acid-based UV absorbers (phenyl salicylate, p-tert-butyl salicylate, etc.), benzophenone-based UV absorbers (2,4-dihydroxybenzophenone, 2,2'-dihydroxy-4,4'-dimethoxybenzophenone, etc.), benzotriazole-based UV absorbers (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidemethyl)-5'-methylphenyl)benzotriazole, 2,2-methylenebis(4-(1,1,3,3-tetramethylbutyl)-6-(2H-benzotriazol-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxycarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazol-2-yl)-6-(linear and branched-chain dodecyl)-4-methylphenol, a mixture of octyl-3-[3-tert-butyl-4-hydroxy-5-(chloro-2H-benzotriazol-2-yl)phenyl]propionate and 2-ethylhexyl-3-[3-tert-butyl-4-hydroxy-5-(5-chloro-2H-benzotriazol-2-yl)phenyl]propionate, etc.), cyanoacrylate-based ultraviolet absorbers (2'-ethylhexyl-2-cyano-3,3-diphenyl acrylate, ethyl-2-cyano-3-(3',4'-methylenedioxyphenyl)-acrylate, etc.), triazine-based UV absorbers, and the like. Thereamong, a benzotriazole-based UV absorber or a triazine-based UV absorber, which has high transparency and an excellent effect of preventing deterioration of the polarizing plate or the transmittance variable layer, is preferable, and a benzotriazole-based UV absorber having a more appropriate spectral absorption spectrum is particularly preferable. The benzotriazole-based UV absorber may be a bis(benzotriazole) compound, for example, 6,6'-methylenebis(2-(2H-benzo[d][1,2,3]triazol-2-yl)-4-(2,4,4-trimethylpentan-2-yl)phenol), 6,6'-methylenebis(2-(2H-benzo[d][1,2,3]triazol-2-yl)-4-(2-hydroxyethyl)phenol), or the like.

The hard coating layer is not particularly limited as long as it is serves to protect members such as the polarizing plate and the transmittance variable layer from external physical or chemical impacts, and a conventional or later-developed hard coating layer may be used.

In one embodiment, the hard coating layer may be formed by applying a composition for forming a hard coating layer onto another member and then curing the same with light or heat. The composition for forming a hard coating layer is not particularly limited and may include, for example, a photocurable compound and a photoinitiator.

As the photocurable compound and the photoinitiator, those commonly used in the art may be used without limitation. For example, the photocurable compound may be a photopolymerizable monomer, a photopolymerizable oligomer, or the like, and examples thereof include monofunctional and/or polyfunctional (meth)acrylates. Examples of the photoinitiator include hydroxycyclohexyl phenyl ketone, trimethylbenzoyl diphenylphosphine oxide, acetophenone, oxime ester, etc., and commercially available photoinitiator products include Irgacure-184, TPO, Irgacure-907, etc.

### <Smart Window, and Automobile and Window for Building>

The present disclosure includes, in addition to the above-described transmittance variable optical laminate, a smart window including the same. In addition, the present disclosure includes an automobile in which the smart window is applied to at least one of a front window, a rear window, a side window, a sunroof window, and an interior partition, and a window for a building including the smart window.

The transmittance variable optical laminate of the present disclosure may be provided attachably/detachably in the indoor side of an automobile or a window for a building, and has the advantages of having excellent scratch resistance and anti-damage properties due to its surface hardness of H or higher, as well as excellent antifouling performance so as not to leave contamination even after frequent contact with fingerprints.

Hereinafter, embodiments of the present disclosure will be described in detail. However, the present invention may be embodied in various different forms and should not be construed as being limited to the examples disclosed below. Rather, these examples are provided so that this disclosure will be thorough and complete and will fully convey the concept of the present disclosure to those skilled in the art, and the present invention will only be defined by the scope of the appended claims

### Preparation Example 1: Production of Polarizing Plate

### (1) Swelling Treatment Process

A 60-µm-thick polyvinyl alcohol film (raw film) (manufactured by Kuraray Co., Ltd., trade name: Kurare Poval Film VF-PE#6000, average degree of polymerization: 2,400, degree of saponification: 99.9 mol%) was continuously unwound from a film roll, conveyed, and dipped in a swelling bath containing pure water at 20°C for 30 seconds. In this swelling treatment process, roll-to-roll stretching (longitudinal uniaxial stretching) was performed by creating a difference in peripheral speed between the nip rolls. The stretching ratio with respect to the raw film was set to 2.5 times.

### (2) Dyeing Treatment Process

Next, the film that passed through the nip rolls was dipped in a dyeing bath containing pure/potassium iodide/iodine/boric acid at having a mass ratio of 100/2/0.01/0.3 at 30°C for 120 seconds. In this dyeing treatment process, roll-to-roll stretching (longitudinal uniaxial stretching) was performed by creating a difference in peripheral speed between the nip rolls. The stretching ratio with respect to the film after the swelling treatment process was set to 1.1 times.

### (3) Crosslinking Treatment Process

Next, the film that passed through the nip rolls was dipped in a first crosslinking bath containing pure water/potassium iodide/boric acid at a mass ratio of 100/12/4 at 56°C for 70 seconds. Roll-to-roll stretching (longitudinal uniaxial stretching) was performed by creating a difference in peripheral speed between the nip rolls and the nip rolls provided between the first crosslinking bath and the second crosslinking bath. The stretching ratio with respect to the film after the dyeing treatment process was set to 1.9 times.

### (4) Color Complementing Process

Next, the film after the crosslinking treatment was dipped in a second crosslinking bath containing potassium iodide/boric acid/pure water at a mass ratio of 9/2.9/100 at 40°C 10 seconds.

### (5) Cleaning Treatment Process

Next, the film after the second crosslinking treatment was dipped in a cleaning bath containing pure water at 14°C for 5 seconds, and washed using a shower method with a shower volume of 5 m³/h at a shower temperature of 14°C.

### (6) Drying Treatment Process

Next, the film after the cleaning treatment process was heat-dried at 80°C for 190 seconds by passage through a drying oven, thereby producing a polarizer film. The moisture content after drying was 13.6%, and the thickness of the obtained polarizer film was about 18 µm.

### (7) Bonding Treatment Process

Next, as an adhesive, an aqueous adhesive containing 5 parts by mass of polyvinyl alcohol per 100 parts by mass of water was prepared. Thereafter, a protective film was laminated on both surfaces of the polarizing film using the prepared UV adhesive. The obtained laminate was exposed to UV light, and the adhesive was cured, thereby producing a first polarizing plate and a second polarizing plate.

The thicknesses of the first polarizing plate and the second polarizing plate are shown in Table 1 below.

### Preparation Example 2: Formation of Adhesion-Imparting Layer

A composition for forming an adhesion-imparting layer was prepared by mixing 16.2 g of a dendrimer compound (Miwon Specialty Chemical Co., Ltd., SP-1106), 14.4 g of inorganic nanoparticles (10 to 20 nm, silica particles: 50 wt%, solvent: methyl ethyl ketone (MEK)), 1.8 g of a multifunctional (meth)acrylate compound containing an ethylene glycol group, 0.7 g of a photoinitiator (1-hydroxycyclohexyl phenyl ketone), and 2.9 g of methyl ethyl ketone.

After determining the Mayer bar type and the solid content and calculating the thickness of the adhesion-imparting layer after curing, the obtained composition for forming an adhesion-imparting layer was applied by bar coating to one surface of each of the first and second polarizing plates produced in Preparation Example 1, and then dried at 80° C. for 5 minutes and cured with a high-pressure mercury lamp at a light dose of 500 mJ/cm², thereby producing first and second polarizing plates having a 7 µm-thick adhesion-imparting layer formed on one surface thereof.

### Preparation Example 3: Formation of Surface Treatment Layer

22.25 wt% of a trifunctional acrylate (MIRAMER M340, Miwon Specialty Chemical Co., Ltd.), 22.25 wt% of a pentafunctional acrylate (SR399LV NS, SARTOMER), 10 wt% of a fluorinated UV-curable functional group-containing compound (KY-1203, diluted in 80 wt% MEK (methyl ethyl ketone), solid content: 20 wt%, Shin-Etsu Chemical Co., Ltd.), 3.5 wt% of 1-hydroxycyclohexyl phenyl ketone, and 42 wt% of methyl ethyl ketone were mixed using a stirrer, and the mixture was filtered through a PP filter, thereby preparing a composition for forming a surface treatment layer.

The composition for forming a surface treatment layer was applied to a surface of the first polarizing plate on which the adhesion-imparting layer was not formed. Then, the applied composition was dried to remove the solvent, and then irradiated with UV light at an integrated dose of 600 mJ/cm² under a nitrogen atmosphere, thereby forming a surface treatment layer. The thickness of the formed surface treatment layer is shown in Table 1 below.

### Comparative Preparation Example 3: Formation of Surface Treatment Layer

13.25 wt% of a trifunctional acrylate (MIRAMER M340, Miwon Specialty Chemical Co., Ltd.), 13.25 wt% of a hexafunctional urethane acrylate (UA-110H, Shin-Nakamura Chemical Co., Ltd.), 20 wt% of a silicone-based UV-curable functional group-containing compound (BYK UV3570, BYK), 3.5 wt% of 1-hydroxycyclohexyl phenyl ketone, and 50 wt% of methyl ethyl ketone were mixed using a stirrer, and the mixture was filtered through a PP filter, thereby preparing a composition for forming a surface treatment layer.

A surface treatment layer was formed on a surface of the first polarizing plate, on which the adhesion-imparting layer was not formed, in the same manner as in Preparation Example 3, and was expressed as Comparative Example 1.

### Preparation Example 4-1: Formation of Pressure sensitive adhesive Layer

A monomer mixture containing 20 wt% of 2-ethylhexylacrylate (2-EHA; first monomer, homopolymer Tg: -70°C; Sigma-Aldrich), 60 wt% of isobornyl acrylate (IBOA; second monomer, homopolymer Tg: 94°C; Sigma-Aldrich), 10 wt% of dihydrodicyclopentadienyl acrylate (DCPA; second monomer, homopolymer Tg: 110°C; BASF), and 10 wt% of 2-hydroxyethylacrylate (2-HEA; third monomer, homopolymer Tg: -15°C; Sigma-Aldrich) was adjusted to a solid content of 20 wt% using ethyl acetate (EA) as a solvent and placed in a 1-L reactor.

The reactor was purged with nitrogen gas for 1 hour to remove oxygen and maintained at a temperature of 80°C. After the monomer mixture was uniformly mixed, azobisisobutyronitrile (AIBN) as a reaction initiator was added in an amount of 0.07 parts by weight based on 100 parts by weight of the monomer mixture, and the resulting mixture was allowed to react for 8 hours, thereby producing an acrylic random copolymer (weight average molecular weight: 650,000, PDI 4.5).

The obtained acrylic random copolymer had a glass transition temperature of 23.1°C (DSC2500, TA Instruments Inc.) and an acid value of 0.015.

A pressure sensitive adhesive composition was prepared by mixing 100 parts by weight of the obtained acrylic random copolymer, 5 parts by weight of an isocyanate compound (D-110N, Mitsui Chemical Company) as a tackifier, and 0.1 parts by weight of a silane coupling agent (KBM-403, Shin-Etsu Chemical Co., Ltd.). Then, the pressure sensitive adhesive composition was applied onto a 75-µm release film coated with a silicone release agent to a thickness of 5 µm, and dried at 120°C for 5 minutes, thereby forming a pressure sensitive adhesive layer. In order to protect the pressure sensitive adhesive layer until use in subsequent processes, a release film coated with a silicone release agent was laminated onto the pressure sensitive adhesive layer, thereby preparing a pressure sensitive adhesive sheet.

After removing the release film from the prepared pressure sensitive adhesive sheet, the pressure sensitive adhesive sheet was bonded to a surface of the second polarizing plate on which the adhesion-imparting layer was not formed.

### Preparation Example 4-2: Formation of Pressure sensitive adhesive Layer

A monomer mixture containing 20 wt% of n-butylacrylate (BA; first monomer, homopolymer Tg: -54°C; Sigma Aldrich), 70 wt% of isobornyl acrylate (IBOA; second monomer, homopolymer Tg: 94°C; Sigma Aldrich), and 10 wt% of 4-hydroxybutyl acrylate (4-HEA; third monomer, homopolymer Tg: -40°C; Sigma Aldrich) was adjusted to a solid content of 20 wt% using ethyl acetate (EA) as a solvent and placed in a 1-L reactor.

The reactor was purged with nitrogen gas for 1 hour to remove oxygen and maintained at a temperature of 80°C. After the monomer mixture was uniformly mixed, azobisisobutyronitrile (AIBN) as a reaction initiator was added in an amount of 0.07 parts by weight based on 100 parts by weight of the monomer mixture, and the resulting mixture was allowed to react for 8 hours, thereby producing an acrylic random copolymer (weight average molecular weight: 890,000).

The obtained acrylic random copolymer had a glass transition temperature of 23.7°C (DSC2500, TA Instruments Inc.) and an acid value of 0.01.

A pressure sensitive adhesive composition was prepared by mixing 100 parts by weight of the obtained acrylic random copolymer, 15 parts by weight of trimethylolpropane tris(2-methyl-1-aziridine propionate) (CL-467, MENADIONA Co., Ltd.) as a tackifier, and 0.1 part by weight of a silane coupling agent (KBM-403, Shin-Etsu Chemical Co., Ltd.), and a pressure sensitive adhesive sheet was prepared in the same manner as in Preparation Example 4-1.

After removing the release film from the prepared pressure sensitive adhesive sheet, the pressure sensitive adhesive sheet was bonded to a surface of the second polarizing plate on which the adhesion-imparting layer was not formed. The formed pressure sensitive adhesive layer was expressed as Example 4.

### Comparative Preparation Example 4: Formation of Pressure sensitive adhesive Laver

An acrylic random copolymer was produced in the same manner as in Preparation Example 4 using a monomer mixture containing 20 wt% of 2-ethylhexyl acrylate (2-EHA; first monomer, homopolymer Tg: -70°C; Sigma-Aldrich), 50 wt% of isobornyl acrylate (IBOA; second monomer, homopolymer Tg: 94°C; Sigma-Aldrich), 10 wt% of dihydrodicyclopentadienyl acrylate (DCPA; second monomer, homopolymer Tg: 110°C; BASF), 19.5 wt% of 2-hydroxyethyl acrylate (2-HEA; third monomer, homopolymer Tg: -15°C; Sigma-Aldrich), and 0.5 wt% of acrylic acid (third monomer, homopolymer Tg: 105°C; Sigma-Aldrich).

The obtained acrylic random copolymer had a weight-average molecular weight of 1.01 million, a glass transition temperature of 3.3°C (DSC2500, TA Instruments Inc.), and an acid value of 2.1.

A pressure sensitive adhesive composition was prepared by mixing 100 parts by weight of the obtained acrylic random copolymer, 10 parts by weight of an isocyanate compound (D-110N, Mitsui Chemical Company) as a tackifier, and 0.1 part by weight of a silane coupling agent (KBM-403, Shin-Etsu Chemical Co., Ltd.), and a pressure sensitive adhesive sheet was prepared in the same manner as in Preparation Example 4-1.

After removing the release film from the prepared pressure sensitive adhesive sheet, the pressure sensitive adhesive sheet was bonded to a surface of the second polarizing plate on which the adhesion-imparting layer was not formed. The formed pressure sensitive adhesive layer was expressed as Comparative Example 3.

**Preparation Example 5: Formation of Transparent Conductive Layer**

A composition for forming a PEDOT functional conductive layer was applied onto the adhesion-imparting layers of the first and second polarizing plates, and dried at 90°C for about 5 to 10 minutes to form functional conductive layers, thereby producing transparent heat-blocking functional layers each having a laminated structure of a functional conductive layer (PEDOT)/base layer (PET). The thicknesses of the functional conductive layers are shown in Table 1 below.

Here, as the composition for forming a PEDOT functional conductive layer, a mixture of 0.6 wt% of PEDOT:PSS, 32.4 wt% of ethanol, 40 wt% of deionized water, and 27 wt% of 2-methoxyethanol was used.

### Preparation Example 6: Formation of Alignment Film

The conductive layer formed in Preparation Example 5 was coated with an alignment solution which was then dried (80°C/2 minutes).

Next, the dried alignment solution was irradiated with UV light, thereby forming an alignment film.

### Preparation Example 7: Preparation of Polymer-Dispersed Liquid Crystal Molecular Laver

A mixture of ethylene glycol dimethacrylate, 1,6-hexanediol diacrylate, and 3,5,5-trimethylhexyl acrylate was used as a pre-polymer, and a single liquid crystal having bicyclohexylbenzene as a central skeleton and a cyano group as a functional group was used as a liquid crystal molecule. A polymer-dispersed liquid crystal molecule layer was prepared using 25 wt% of the pre-polymer, 70 wt% of the liquid crystal molecules, and 5 wt% of a crosslinking agent.

### Examples and Comparative Examples: Production of Optical Laminates

The alignment film on the first polarizing plate and the alignment film on the second polarizing plate, formed through each of Preparation Examples 1 to 6, were bonded to face each other with the polymer dispersed liquid crystal molecule layer (prepared in Preparation Example 7) interposed therebetween using an acrylic pressure sensitive adhesive (Dongwoo Finechem Co., Ltd., #NS NCF) having a thickness of 25 µm, thereby producing optical laminates. The configurations and thicknesses of the layer of each of the Examples and the Comparative Examples are shown in Table 1 below.

### Experimental Example: Evaluation of Physical Properties

### (1) Storage Modulus of Pressure sensitive adhesive Layer

For the pressure sensitive adhesive layers of Preparation Examples 4-1, 4-2 and Comparative Preparation Example 4, the storage modulus at 25°C was measured using a viscoelasticity measuring device (MCR-301, Anton Paar). More specifically, the pressure sensitive adhesive sheet was cut to a size of 30 mm in length × 30 mm in width, and the release film attached to one surface of the cut pressure sensitive adhesive sheet was removed, and then the pressure sensitive adhesive sheet was bonded to a glass substrate. Thereafter, in a state in which the sample was attached to a measuring tip, the storage modulus at 25°C was measured under the conditions of a frequency of 1.0 Hz, a strain of 2%, and a heating rate of 5°C/min in a temperature range of -20 to 100°C. The storage modulus was evaluated according to the following criteria, and the results are shown in Table 1 below.

### <Criteria for Evaluation>

⊚: Storage modulus of 50 MPa or more at 25°C;
O: Storage modulus of 10 MPa to less than 50 MPa at 25°C;
×: Storage modulus of less than 10 MPa at 25°C

### (2) Surface Hardness of Optical Laminate

For the first polarizing plate side of the optical laminate of each of the Examples and the Comparative Examples, the pencil hardness of the hard coating layer side of the polarizing plate (or the inner side surface of the polarizing plate) was measured using a pencil hardness tester (Pencil Hardness Tester, Korea Sukbo Science) at a load of 500 g. The pencil used was a Mitsubishi product, and five measurements were made for each pencil hardness. The pencil hardness was measured based on whether scratches occurred after heat treatment at 100°C for 10 minutes, and the results were expressed as the surface hardness in Table 1 below.

### (3) Antifouling Properties

The water contact angle was measured using the contact angle measuring device DSA100 (KRUSS). The volume of the liquid droplet at room temperature was 3 µL. A measured water contact angle of 100° or more was rated as "OK", and a measured water contact angle of less than 100° was rated as "NG". The results are shown in Table 1 below.

**[Table 1]**

| | Example 1 | Example 2 | Example 3 | Example 4 | Comparative Example 1 | Comparative Example 2 | Comparative Example 3 |
|---|---|---|---|---|---|---|---|
| Surface treatment layer | Preparation Example 3, 10 µm | Preparation Example 3, 10 µm | Preparation Example 3, 5 µm | Preparation Example 3, 10 µm | Comparative Preparation Example 3, 10 µm | Preparation Example 3, 3 µm | Preparation Example 3, 5 µm |
| First polarizing plate | 116 µm | 116 µm | 116 µm | 116 µm | 96µm | 116 µm | 116 µm |
| Second polarizing plate | 116 µm | 96 µm | 96 µm | 96 µm | 116 µm | 96 µm | 96 µm |
| pressure sensitive adhesive layer | Preparation Example 4-1 | Preparation Example 4-1 | Preparation Example 4-1 | Preparation Example 4-2 | Preparation Example 4-1 | Preparation Example 4-1 | Comparative Preparation Example 4 |
| Storage modulus of pressure sensitive adhesive layer | O | O | O | ⊚ | O | O | X |
| Surface hardness | 2H | H | H | 2H | HB | 2B | 5B |
| Antifouling property | OK | OK | OK | OK | NG | OK | OK |

Referring to the experimental results shown in Table 1 above, it was confirmed that the optical laminates of Examples 1 to 4 of the present disclosure not only had excellent storage modulus of the pressure sensitive adhesive layer formed on one surface, but also exhibited excellent surface hardness and antifouling properties by the surface treatment layer formed on the other surface. In contrast, in the case of the optical laminates of Comparative Examples 1 to 3, it could be confirmed that the surface hardness and/or antifouling properties were poor, making it difficult to use the optical laminate in a state in which one surface of the polarizing plate is exposed to the outside, or that the storage modulus of the pressure sensitive adhesive layer was not sufficiently ensured, indicating that the attachment or detachment of the optical laminate to and from an adherend is not easy.

## Claims

1. A transmittance variable optical laminate comprising:
a first polarizing plate;
a surface treatment layer formed on one surface of the first polarizing plate;
a first transparent conductive layer formed on the other surface of the first polarizing plate;
a second polarizing plate opposite to the first polarizing plate;
a second transparent conductive layer formed on one surface of the second polarizing plate and opposite to the first transparent conductive layer;
a liquid crystal layer provided between the first transparent conductive layer and the second transparent conductive layer; and
a pressure sensitive adhesive layer provided on a surface of the second polarizing plate on which the second transparent conductive layer is not formed,
wherein a thickness of the first polarizing plate is equal to or greater than a thickness of the second polarizing plate, and the transmittance variable optical laminate has a surface hardness of H or higher.

2. The transmittance variable optical laminate of claim 1, wherein the surface treatment layer has a thickness of 5 to 30 µm.

3. The transmittance variable optical laminate of claim 1 or 2, wherein the first polarizing plate and the second polarizing plate each have a thickness of 30 µm to 200 µm.

4. The transmittance variable optical laminate of one of claims 1 to 3, wherein the pressure sensitive adhesive layer has a storage modulus of 10 MPa or more at 25°C.

5. The transmittance variable optical laminate of one of claims 1 to 4, wherein the surface treatment layer has a water contact angle of 100° or more.

6. The transmittance variable optical laminate of one of claims 1 to 5, wherein a liquid crystal driving mode of the liquid crystal layer is any one selected from the group consisting of a twisted nematic (TN) mode, a super-twisted nematic (STN) mode, an in-plane switching (IPS) mode, a fringe-field switching (FFS) mode, an electrically controlled birefringence (ECB) mode, and a vertical alignment (VA) mode.

7. The transmittance variable optical laminate of claim 6, wherein the liquid crystal driving mode of the liquid crystal layer is the twisted nematic (TN) mode.

8. The transmittance variable optical laminate of one of claims 1 to 7, wherein the liquid crystal layer comprises a polymer network and a liquid crystal compound, wherein the liquid crystal compound is arranged with uniform initial alignment.

9. The transmittance variable optical laminate of claim 8, wherein the liquid crystal layer comprises a cured product of a composition for forming a liquid crystal layer comprising a polymerizable monomer and the liquid crystal compound.

10. The transmittance variable optical laminate of claim 9, wherein the composition for forming the liquid crystal layer comprises the polymerizable monomer in an amount of 10 to 30 wt% based on the total weight of the composition.

11. The transmittance variable optical laminate of one of claims 1 to 10, wherein at least one of the first transparent conductive layer and the second transparent conductive layer is formed in direct contact with the first polarizing plate or the second polarizing plate without comprising a separate substrate therebetween.

12. The transmittance variable optical laminate of one of claims 1 to 11, wherein at least one of the first transparent conductive layer and the second transparent conductive layer is formed in direct contact with the first polarizing plate or the second polarizing plate while comprising a highly adhesive layer therebetween.

13. The transmittance variable optical laminate of one of claims 1 to 12, wherein at least one of the first polarizing plate and the second polarizing plate comprises at least one functional layer selected from the group consisting of a protective layer, an adhesion-imparting layer, a retardation matching layer, and a refractive index-matching layer.

14. The transmittance variable optical laminate of one of claims 1 to 13, wherein at least one of the first transparent conductive layer and the second transparent conductive layer comprises at least one selected from the group consisting of a transparent conductive oxide, a metal, a carbonaceous material, a conductive polymer, a conductive ink, and nanowires.

15. A smart window comprising the above-described transmittance variable optical laminate of any one of claims 1 to 14.
